# FASCICULE DE BREVET EUROPEEN

(11) **EP 1 911 992 B1**
(45) Date de publication et mention de la délivrance du brevet: **10.03.2010**
(21) Numéro de dépôt: 07356134.2
(22) Date de dépôt: 10.10.2007
(51) Int. Cl.: F16H 1/20, F16H 55/24, B60N 2/02, B60S 1/26, E05F 15/16

(54) **Dispositif de transmission de mouvements, equipement electrique et vehicule automobile correspondants**
Vorrichtung zur Übertragung von Bewegungen sowie entsprechende elektrische Ausstattung und entsprechendes Kraftfahrzeug
Movement transmission device, corresponding electrical equipment and automobile

(30) Priorité: 11.10.2006 FR 0608908
(43) Date de publication de la demande: 16.04.2008
(73) Titulaire: ITW SMPI, 74300 Cluses (FR)
(72) Inventeur: Richard, Didier, 74130 Marignier (FR); Combaluzier, Christophe, 74700 Sallanches (FR)
(74) Mandataire: Schouller, Jean-Philippe

(56) Documents cités:
- EP-A- 0 792 779
- EP-A2- 1 468 897
- WO-A-2004/061329
- AT-B- 286 051
- FR-A- 2 521 671
- US-A- 3 851 537
- US-A- 5 233 886

## Description

La présente invention concerne un dispositif de transmission de mouvements, un équipement électrique pourvu d'au moins un tel dispositif de transmission de mouvements, ainsi qu'un véhicule automobile pourvu d'au moins un tel équipement électrique.

On retrouve un dispositif de transmission de mouvements dans différents appareillages électriques, en particulier dans ceux équipant des véhicules automobiles. Dans ces conditions, de teis équipements électriques sont par exemple un lève-vitre, un dispositif de déplacement d'un siège, un essuie-glace, ou encore une direction assistée électrique. Ainsi, dans le cas où il équipe un lève-vitre électrique, un tel dispositif de transmission est interposé entre un moteur électrique et une commande de déplacement de la vitre proprement dite.

L'invention trouve également son application à des appareillages électriques, qui ne sont pas destinés à l'industrie automobile. On citera ainsi, à titre d'exemple, un dispositif de codage de machine outil, des équipements électroménagers ou encore de l'outillage électroportatif.

Une première solution connue consiste à former le dispositif de transmission de mouvements évoqué ci-dessus à partir d'une vis sans fin associée à une roue tangente, dont les dents sont ménagées sur le bord périphérique de cette dernière. Cette solution implique cependant certains inconvénients, notamment en ce sens qu'elle ne permet pas de transmettre des couples élevés dans un faible encombrement.

Afin de remédier à ce dernier problème, on a prévu d'associer un premier organe de transmission, tel une vis sans fin ou un pignon, avec une roue de type faciale, à savoir une roue dont une face est creusée de dentures propres à coopérer avec l'organe de transmission précité. De cette façon, celui-ci est propre à engrener simultanément avec plusieurs dents de la roue faciale alors que, par comparaison, une vis sans fin ne peut engrener qu'avec une, voire éventuellement deux dents de la roue tangente.

Cette solution faisant intervenir une vis sans fin ou un pignon, ainsi qu'une roue faciale, implique cependant d'autres inconvénients. En effet, elle peut s'accompagner d'une usure rapide de ces composants, en particulier de la roue faciale si le couple à transmettre est élevé. La mise en oeuvre de ce dispositif génère également, dans ce cas, une casse prématurée des dentures de la roue, en particulier lorsque cette dernière est réalisée en un matériau plus fragile que celui constitutif de la vis.

On connaît en outre, par US-A-5,233,886 et US-A-3,851,537, des agencements dans lesquels deux roues dentées sont entraînées en rotation, selon des sens opposés.

Enfin, AT-286051-B concerne un dispositif de transmission de mouvements reprenant toutes les caractéristiques du préambule de la revendication 1 annexée.

Ceci étant précisé, l'invention vise à remédier aux différents inconvénients de l'art antérieur évoqués ci-dessus.

A cet effet, elle a pour objet un dispositif de transmission de mouvements selon la revendication 1 annexée.

L'invention a également pour objet un équipement électrique selon la revendication 14 annexée.

L'invention a enfin pour objet un véhicule automobile pourvu d'au moins un équipement électrique tel que défini ci-dessus.

L'invention va être décrite ci-après, en référence à la description qui va être faite de plusieurs modes de réalisation en référence aux dessins annexés, donnés uniquement à titre d'exemples non limitatifs, dans lesquels :
- la figure 1 est une vue en perspective, illustrant un dispositif de transmission de mouvements conforme à l'invention ;
- la figure 2 est une vue de côté, illustrant le dispositif de transmission de mouvements de la figure 1 ;
- les figures 3 à 6 sont des vues en perspective, illustrant différentes variantes de réalisation de l'invention ; et
- les figures 7 et 8 sont des vues de face, illustrant une comparaison entre l'art antérieur et le mode de réalisation des figures 3 à 6, en ce qui concerne l'éventuel jeu entre dentures.

Le dispositif de transmission de mouvement conforme à l'invention, qui est désigné dans son ensemble par la référence 1, appartient par exemple à un lève-vitre d'un véhicule automobile. Cependant, il est susceptible d'être intégré dans d'autres types d'équipements électriques, en particulier pour véhicule automobile.

Ce dispositif de transmission 1 comprend tout d'abord un premier organe de transmission, à savoir une vis sans fin de type classique, désignée dans son ensemble par la référence 2, qui est entraînée par exemple par l'intermédiaire d'un moteur électrique non représenté. A titre de variante, ce premier organe de transmission peut être de type différent d'une vis sans fin, à savoir notamment un pignon cylindrique ou conique, de type connu. Le dispositif 1 conforme à l'invention comprend en outre un couple de roues dentées 4₁ et 4₂, s'étendant de manière symétrique par rapport à un plan médian, noté P.

Ces roues dentées présentent des faces en regard 4'₁ et 4'₂, dans lesquelles sont ménagées des dentures u'engrènement 6₁ et 6₂. Etant donné que ces dentures sont présentes sur les faces des roues, elles sont dénommées « faciales », et peuvent notamment être de type spiroïde, lorsqu'elles coopèrent avec une vis sans fin, ou encore de type conique lorsqu'elles coopèrent avec un pignon conique. Ces dentures faciales sont également susceptibles de coopérer avec un pignon cylindrique. On notera que les dentures en regard 6₁ et 6₂ sont avantageusement identiques, ce qui signifie qu'elles présentent les mêmes dimensions et les mêmes orientations.

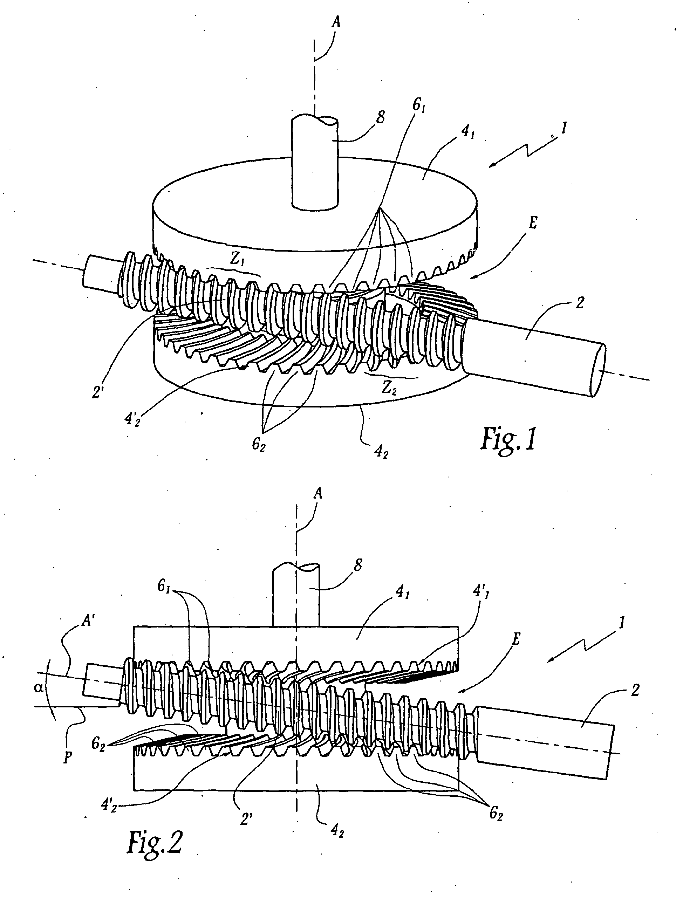

Ces deux roues sont liées mutuellement par l'intermédiaire d'un arbre 8, s'étendant verticalement sur la figure 2, qui définit un axe de rotation commun A des deux roues 4, dans un même sens. Cet arbre 8 est propre à entraîner un moyeu non représenté, appartenant au mécanisme à déplacer, en particulier à la commande de la vitre qu'il s'agit de mettre en mouvement.

En référence à la figure 2, qui illustre le dispositif vu de côté, l'axe de rotation A des deux roues 4₁ et 4₂ est perpendiculaire à leur plan médian de symétrie P. De plus, les faces en regard 4₁' et 4₂' définissent un espace intermédiaire E, dans lequel s'étendent les dentures 2' de la vis sans fin 2.

Cependant, il existe un angle, noté α, entre l'axe principal A' de la vis sans fin 2 et ce plan médian P. La valeur de cet angle de décalage α est par exemple comprise entre 2 et 20°, notamment voisine de 5°. Enfin on notera que, si l'on regarde les roues dentées de dessus, la vis sans fin 2 est décalée par rapport à l'axe géométrique A, de manière à permettre le passage de l'arbre 8.

La présence de l'angle α est avantageuse, car elle permet aux dentures 2' de la vis sans fin de se trouver en prise, de manière simultanée, avec les dentures respectives 6₁ et 6₂ des deux roues dentées 4₁ et 4₂, On note ainsi Z₁ et Z₂ les zones respectives des deux roues, qui viennent en prise avec les dentures 2' de la vis sans fin 2. Vues de côté, ces deux zones sont globalement symétriques par rapport à l'axe de rotation A de ces deux roues.

Dans l'exemple illustré, la vis sans fin 2 est menante, alors que les roues dentées 4₁ et 4₂ sont menées. Cependant, le dispositif conforme à l'invention est généralement susceptible de fonctionner de façon inversée, à savoir que les roues sont menantes, alors que la vis sans fin est menée.

A titre de variante supplémentaire, non représentée, la liaison mécanique entre ies deux roues dentées peut être différente d'un arbre. Ainsi, il est possible de faire appel à des crabots ou à des cannelures.

Le mode de réalisation décrit en référence aux figures 1 et 2 présente les avantages suivants.

La présence de deux roues dentées, entre lesquelles s'étend un organe de transmission, du type vis sans fin ou pignon, permet de réduire sensiblement les contraintes mécaniques exercées sur les dentures de ces roues. Par ailleurs, on notera que le dispositif conforme à l'invention est d'une compacité satisfaisante. Ainsi, l'agencement globalement symétrique des deux roues n'induit pas une augmentation inacceptable de l'encombrement total de ce dispositif.

La diminution des contraintes que subissent les dentures des roues est avantageuse, puisqu'elle s'accompagne d'une diminution sensible de l'usure de ces dentures, et minimise également les risques de casse mécanique.

De plus, la présence de ces deux roues, de part et d'autre de l'organe de transmission central, permet d'augmenter le couple transmis, par comparaison avec la solution faisant intervenir une unique roue. Dans ces conditions, il est également possible, pour un couple visé, d'utiliser pour ces roues un matériau moins résistant, et par conséquent moins onéreux, que dans la solution de l'état de la technique.

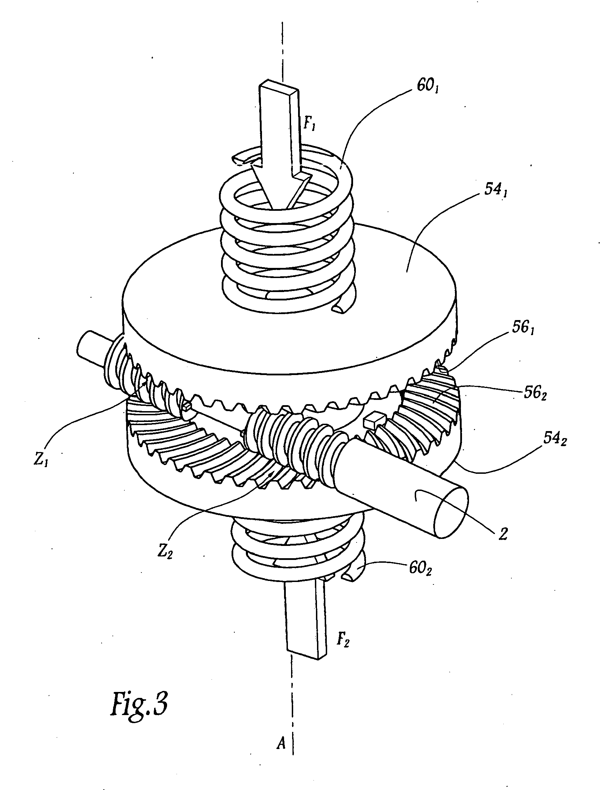

La figure 3 illustre une variante de réalisation de l'invention dans lequel chaque roue dentée 54₁ et 54₂ est associée à un ressort de compression 60₁ et 60₂. Chaque ressort qui s'étend selon l'axe A, est intercalé entre une butée fixe, non représentée, et la face en regard d'une roue correspondante opposée aux dentures 56₁ et 56₂. Dans ces conditions, ces ressorts exercent des forces axiales respectives notées F₁ et F₂, qui tendent à repousser les roues 54₁ et 54₂ en direction de la vis sans fin centrale 2. De façon plus précise, l'action de ces ressorts contribue à plaquer les dentures 56₁ et 56₂ de ces deux roues contre les dentures 2' de la vis sans fin 2, dans les zones Z₁ et Z₂.

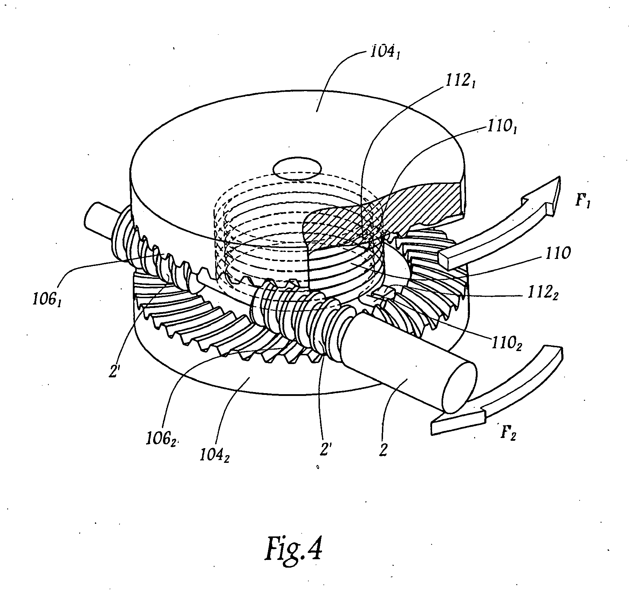

La figure 4 illustre une autre variante de réalisation de l'invention, dans laquelle les roues dentées 104₁ et 104₂ sont désormais associées à un ressort de torsion 110. Les extrémités 110₁ et 110₂ de ce ressort viennent en butée contre des ergots respectifs 112₁ et 112₂, dont sont pourvues les roues 104₁ et 104₂. Dans ces conditions, faction de ce ressort de torsion 110 contribue à repousser les deux roues selon les flèches respectives F'₁ et F'₂. Comme évoqué précédemment dans le cas du mode de réalisation de la figure 3, ce ressort contribue donc à plaquer les dentures 106₁ et 106₂ de ces deux roues contre les dentures 2' de la vis sans fin 2, au niveau des zones Z₁ et Z₂.

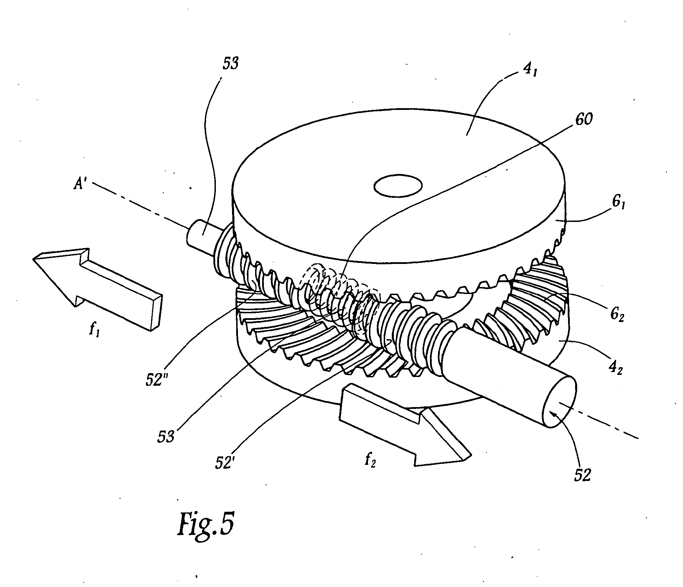

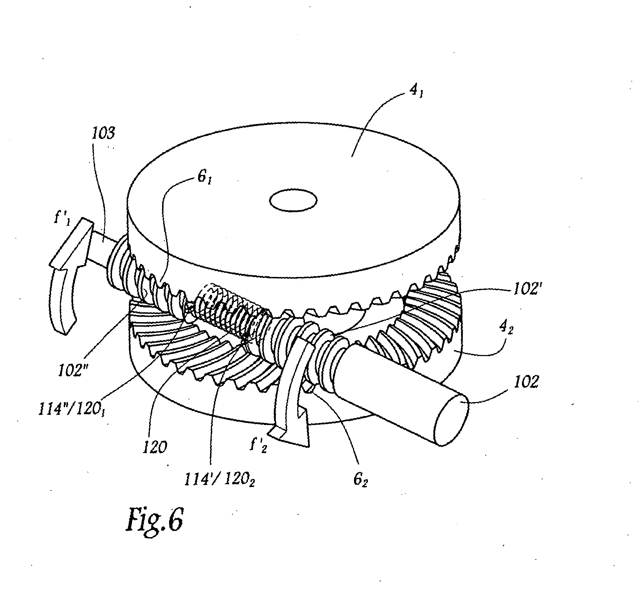

Les figures 5 et 6 illustrent deux variantes supplémentaires de réalisation de l'invention, dans lesquelles la vis sans fin 52 ou 102 présente une structure différente de celle de la vis 2 des figures précédentes. Ainsi, cette vis sans fin 52 ou 102 possède deux tronçons dentées 52' ou 102', et 52" ou 102", susceptibles de coulisser l'un par rapport à l'autre selon l'axe principal A' de cette vis. On peut prévoir, comme dans l'exemple illustré, que la vis possède un arbre central lisse 53 ou 103, par rapport auquel peuvent coulisser ces deux tronçons dentés. A titre d'alternative, l'un de ces deux tronçons peut être solidaire de cet arbre central, alors que seul l'autre tronçon denté est monté coulissant.

Dans le mode de réalisation de la figure 5, un ressort de compression 60 est monté sur l'arbre central 53, en étant interposé entre les deux tronçons dentés coulissants 52' et 52". Dans ces conditions, ce ressort 60 exerce une action de rappel matérialisée par les flèche f₁ et f₂, qui a tendance à repousser les tronçons dentés en direction des dentures respectives 6₁ et 6₂ des roues dentées en regard 4₁ et 4₂.

Dans le mode de réalisation de la figure 6, la vis sans fin 102 est associée, non plus à un ressort de compression, mais à un ressort de torsion 120. Les deux extrémités 120₁ et 120₂ de ce dernier viennent en butée contre des ergots 114' et 114", dont sont munis les deux tronçons dentés coulissants 102' et 102". Ce ressort de torsion 120 contribue à exercer deux forces de rappel, matérialisées par les flèches f'₁ et f'₂, qui repoussent les tronçons dentés 102' et 102" contre les dentures des roues 4₁ et 4₂, comme dans le mode de réalisation de la figure 5.

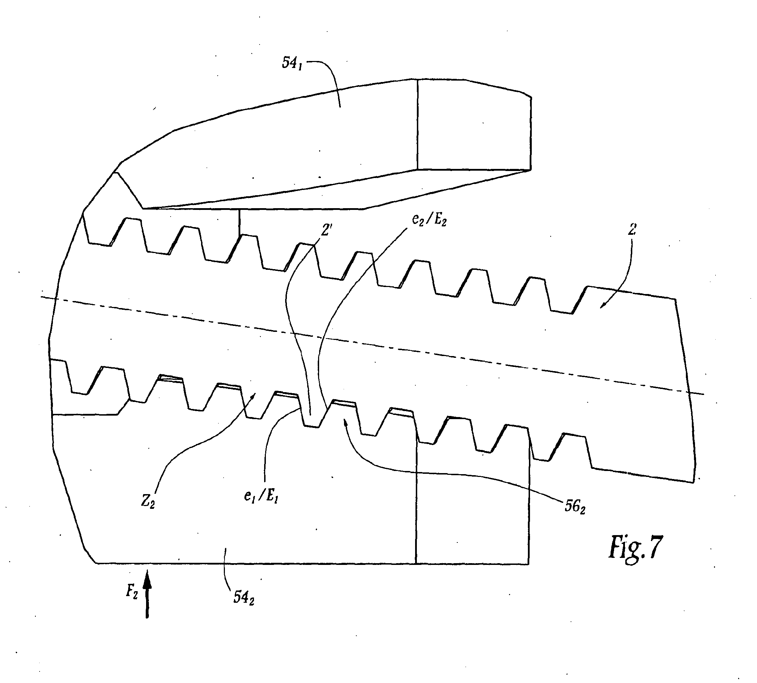

Le mode de réalisation des figures 3 à 6 présente des avantages spécifiques, comme cela est illustré notamment à la figure 7. Sur cette dernière, qui est un agrandissement de la figure 3, on retrouve la zone Z₂, où coopèrent les dentures 56₂ de la roue 54₂ et les dentures 2' de la vis sans fin 2, étant entendu que la coopération de ces dentures est analogue dans l'autre zone Z₁. Le ressort 60₂ tend à repousser cette roue contre la vis sans fin, selon la flèche F₂, de sorte que les flancs e₁ et e₂ de chaque denture 2' sont plaqués contre les flancs en regard E₁ et E₂ de chaque denture 56₂.

En d'autres termes, il n'existe sensiblement aucun jeu entre chaque couple de dentures, ce qui est avantageux notamment en termes de précision de la transmission. En effet, lorsque la vis sans fin et les roues dentées sont entraînées dans un premier sens de rotation, la transmission du mouvement est produite par la coopération d'un premier couple de flancs en regard, par exemple celui e₁ et E₁.

Si l'on change le sens de rotation des différents organes précités, la transmission du mouvement est désormais assurée par la coopération de l'autre couple de flancs, par exemple celui e₂ et E₂. Du fait de l'absence de jeu, le changement de sens de rotation ne s'accompagne d'aucune zone morte, à savoir que le second couple de flancs est propre à assurer la transmission de façon immédiate.

Ceci est particulièrement avantageux en termes de précision de la transmission ainsi réalisée. Par ailleurs, cette mesure assure un confort d'utilisation substantiel, notamment dans le cas d'une direction assistée électrique, ou encore de codeurs rotatifs.

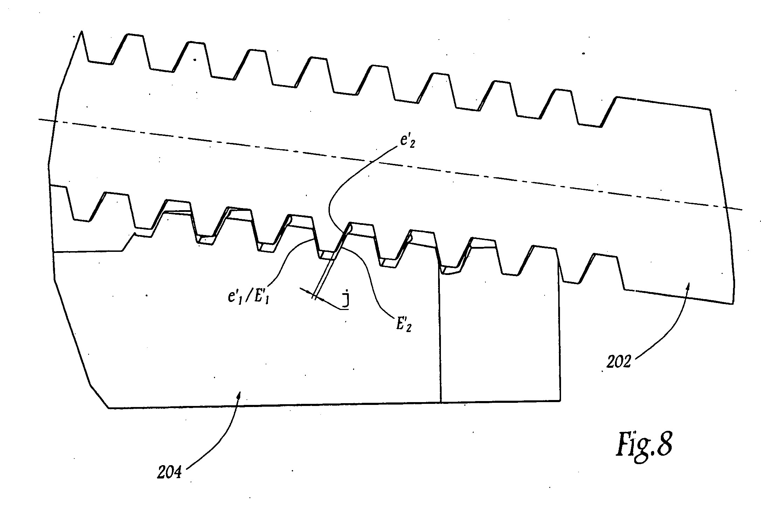

Ceci est à comparer avec un art antérieur, reproduit à la figure 8, où l'on retrouve une vis sans fin 202 et une roue dentée 204. Lorsque la transmission de mouvement s'opère dans un premier sens de rotation, il y a coopération entre un premier couple de flancs en regard e'₁ et E'₁, alors qu'il existe un jeu, noté i, entre l'autre couple de flancs e'₂ et E'₂.

Dans ces conditions, lorsqu'on change le sens de rotation des différents organes dentés, l'existence de ce jeu i s'accompagne d'un temps de latence dans la transmission, à savoir que le second couple de flancs e'₂ et E'₂ ne coopère pas immédiatement après ce changement de sens. Ceci induit un manque de précision dans la transmission de mouvements, ainsi qu'un manque de confort notamment dans le cas d'une direction assistée électrique ou encore une imprécision de la mesure pour un codeur rotatif.

## Revendications

1. Dispositif de transmission de mouvements (1), pour équipement électrique appartenant notamment à un véhicule automobile, tel qu'un lève-vitre, un dispositif de déplacement d'un siège, un essuie-glace ou une direction assistée électrique, ce dispositif comprenant un premier organe de transmission, tel une vis sans fin (2 ; 52 ; 102) ou un pignon, ainsi que deux roues dentées (4₁, 4₂ ; 54₁, 54₂; 104₁, 104₂), propres à être entraînées en rotation dans un même sens autour d'un axe commun (A), ces deux roues étant séparées par un espace intermédiaire (E) et étant pourvues de dentures (6₁, 6₂ ; 56₁, 56₂ ; 106₁, 106₂) sur leurs faces en regard, qui bordent cet espace intermédiaire (E), alors que le premier organe de transmission s'étend dans cet espace intermédiaire (E), de manière à coopérer avec les deux dentures des roues en regard, **caractérisé en ce que** ce dispositif comprend un outre des moyens de plaquage (60₁, 60₂ ; 110 ; 60 ; 120), les unes contre les autres, des dentures du premier organe de transmission et des dentures des deux roues dentées.

2. Dispositif selon la revendication 1, **caractérisé en ce que** le premier organe de transmission (2) possède un axe principal (A'), qui est décalé par rapport à une perpendiculaire (P) à l'axe de rotation (A) commun des deux roues (4₁, 4₂), selon un angle de décalage (α).

3. Dispositif selon la revendication 2, **caractérisé en ce que** l'angle de décalage (α) est compris entre 2 et 20°, notamment voisin de 5°.

4. Dispositif selon l'une quelconque des revendications précédentes,
**caractérisé en ce que** les deux roues (4₁, 4₂) sont symétriques l'une de l'autre par rapport à un plan médian (P).

5. Dispositif selon l'une quelconque des revendications précédentes,
**caractérisé en ce qu'**il est prévu des moyens (8) de liaison mécanique entre les deux roues (4₁, 4₂), permettant leur entraînement dans un même sens de rotation.

6. Dispositif selon la revendication 5, **caractérisé en ce que** les moyens de liaison mécanique comprennent un arbre (8) s'étendant selon l'axe de rotation (A) des deux roues, ou encore des crabots ou des cannelures.

7. Dispositif selon l'une quelconque des revendications précédentes,
**caractérisé en ce que** les dentures en regard (6₁, 6₂) équipant les deux roues (4₁, 4₂) sont identiques.

8. Dispositif selon l'une des revendications 1 à 7, **caractérisé en ce que** les moyens de plaquage comprennent des moyens de rappel (60₁, 60₂ ; 110), notamment élastique, propres à repousser les dentures (56₁, 56₂ ; 106₁, 106₂) des deux roues dentées (54₁, 54₂ ; 104₁, 104₂) contre les dentures (2') du premier organe de transmission (2).

9. Dispositif selon la revendication 8, **caractérisé en ce que** les moyens de rappel comprennent au moins un ressort de compression (60₁, 60₂), s'étendant sensiblement selon l'axe commun (A) des deux roues, le ou chaque ressort axial étant propre à repousser une roue dentée correspondante (54₁, 54₂) en direction du premier organe de transmission (2).

10. Dispositif selon la revendication 8, **caractérisé en ce que** les moyens de rappel comprennent un ressort de torsion (110), s'étendant entre les deux roues dentées (104₁, 104₂), chaque extrémité de ce ressort de torsion prenant appui contre une roue dentée en regard.

11. Dispositif selon l'une des revendications 1 à 7, **caractérisé en ce que** le premier organe de transmission (52 ; 102) comprend deux tronçons dentés (52', 52" ; 102', 102") susceptibles de coulisser l'un par rapport à l'autre et les moyens de plaquage comprennent des moyens de rappel (60 ; 120), notamment élastique, propres à repousser les deux tronçons dentés à l'opposé l'un de l'autre, contre les dentures (6₁, 6₂) d'une roue dentée correspondante (4₁, 4₂).

12. Dispositif selon la revendication 11, **caractérisé en ce que** les moyens de rappel comprennent un ressort de compression (60), interposé entre les deux tronçons dentés coulissants (52', 52").

13. Dispositif selon la revendication 11, **caractérisé en ce que** les moyens de rappel comprennent un ressort de torsion (120) interposé entre les deux tronçons dentés coulissants (102' 102"), chaque extrémité de ce ressort de torsion prenant appui contre un tronçon coulissant correspondant.

14. Equipement électrique, notamment lève-vitre, dispositif de déplacement d'un siège, essuie-glace, direction assistée électrique ou codeur de machine outil, **caractérisé en ce qu'**il comprend au moins un dispositif de transmission de mouvements conforme à l'une quelconque des revendications précédentes.

15. Véhicule automobile comprenant au moins un équipement électrique conforme à la revendication précédente.

## Claims

1. Movement transmission device (1) for electrical equipment belonging in particular to a motor vehicle, such as a window lifter, a device for moving a seat, a windscreen wiper or an electrical assisted steering system, this device comprising a first transmission member, such as a worm (2; 52; 102) or a pinion, and also two toothed wheels (4₁, 4₂; 54₁, 54₂; 104₁, 104₂) which can be rotated in the same direction about a common axis (A), these two wheels being separated by an intermediate space (E) and being provided with toothings (6₁, 6₂; 56₁, 56₂; 106₁, 106₂) on their opposite faces that border this intermediate space (E), while the first transmission member extends in this intermediate space (E) so as to cooperate with the two toothings of the opposite wheels, **characterized in that** the device additionally comprises means (60₁, 60₂; 110; 60; 120) for pressing the toothings of the first transmission member and the toothings of the two toothed wheels against one another.

2. Device according to Claim 1, **characterized in that** the first transmission member (2) has a main axis (A') which is offset with respect to a perpendicular (P) to the common axis of rotation (A) of the two wheels (4₁, 4₂) by an offset angle (α).

3. Device according to Claim 2, **characterized in that** the offset angle (α) is between 2 and 20°, in particular approximately 5°.

4. Device according to any one of the preceding claims, **characterized in that** the two wheels (4₁, 4₂) are symmetrical to one another with respect to a midplane (P).

5. Device according to any one of the preceding claims, **characterized in that** there are provided mechanical connection means (8) between the two wheels (4₁, 4₂) enabling them to be driven in the same direction of rotation.

6. Device according to Claim 5, **characterized in that** the mechanical connection means comprise a shaft (8) extending along the axis of rotation (A) of the two wheels, or else dogs or splines.

7. Device according to any one of the preceding claims, **characterized in that** the opposite toothings (6₁, 6₂) equipping the two wheels (4₁, 4₂) are identical.

8. Device according to one of Claims 1 to 7, **characterized in that** the pressing means comprise return means (60₁, 60₂; 110), in particular elastic return means, designed to push the toothings (56₁, 56₂; 106₁, 106₂) of the two toothed wheels (54₁, 54₂; 104₁, 104₂) against the toothings (2') of the first transmission member (2).

9. Device according to Claim 8, **characterized in that** the return means comprise at least one compression spring (60₁, 60₂) extending substantially along the common axis (A) of the two wheels, the or each axial spring being able to push a corresponding toothed wheel (54₁, 54₂) in the direction of the first transmission member (2).

10. Device according to Claim 8, **characterized in that** the return means comprise a torsion spring (110) extending between the two toothed wheels (104₁, 104₂), each end of this torsion spring bearing against an opposite toothed wheel.

11. Device according to one of Claims 1 to 7, **characterized in that** the first transmission member (52; 102) comprises two toothed portions (52', 52"; 102', 102") capable of sliding with respect to one another, and the pressing means comprise return means (60; 120), in particular elastic return means, designed to push the two toothed sections in opposite directions to one another, against the toothings (6₁, 6₂) of a corresponding toothed wheel (4₁, 4₂).

12. Device according to Claim 11, **characterized in that** the return means comprise a compression spring (60) interposed between the two sliding toothed portions (52', 52").

13. Device according to Claim 11, **characterized in that** the return means comprise a torsion spring (120) interposed between the two sliding toothed portions (102', 102''), each end of this torsion spring bearing against a corresponding sliding portion.

14. Electrical equipment, in particular window lifter, device for moving a seat, windscreen wiper, electrical assisted steering system or machine tool encoder, **characterized in that** it comprises at least one movement transmission device according to any one of the preceding claims.

15. Motor vehicle comprising at least one item of electrical equipment according to the preceding claim.

## Patentansprüche

1. Vorrichtung (1) zur Übertragung von Bewegungen für eine elektrische Ausrüstung, insbesondere für ein Kraftfahrzeug, wie zum Beispiel einen Fensterheber, eine Sitzverstellvorrichtung, einen Scheibenwischer oder eine elektrische Hilfskraftlenkung, wobei diese Vorrichtung ein erstes Übertragungsglied, wie zum Beispiel eine Schnecke (2; 52; 102) oder ein Ritzel, sowie zwei Zahnräder (4₁, 4₂; 54₁, 54₂; 104₁, 104₂) umfasst, die in einer ersten Richtung um eine gemeinsame Achse (A) drehangetrieben werden können, wobei diese beiden Räder durch einen Zwischenraum (E) getrennt werden und mit einer Verzahnung (6₁, 6₂; 56₁, 56₂; 106₁, 106₂) auf ihren einander gegenüberliegenden Flächen versehen sind, die an diesen Zwischenraum (E) angrenzen, während sich das erste Übertragungsglied so in diesem Zwischenraum (E) erstreckt, dass es mit den beiden einander gegenüberliegenden Verzahnungen der Räder zusammenwirken kann,
**dadurch gekennzeichnet, dass** diese Vorrichtung des Weiteren Mittel (60₁, 60₂; 110; 60; 120) zum Aneinanderdrücken der Verzahnung des ersten Übertragungsglieds und der Verzahnung der beiden Zahnräder umfasst.

2. Vorrichtung nach Anspruch 1, **dadurch gekennzeichnet, dass** das erste Übertragungsglied (2) eine Hauptachse (A') aufweist, die bezüglich einer Senkrechten (P) zu der gemeinsamen Drehachse (A) der beiden Räder (4₁, 4₂) gemäß einem Versatzwinkel (α) versetzt ist.

3. Vorrichtung nach Anspruch 2, **dadurch gekennzeichnet, dass** der Versatzwinkel (α) zwischen 2 und 20°, insbesondere nahe 5°, liegt.

4. Vorrichtung nach einem der vorhergehenden Ansprüche, **dadurch gekennzeichnet, dass** die beiden Räder (4₁, 4₂) bezüglich einer mittlere Ebene (P) symmetrisch zueinander sind.

5. Vorrichtung nach einem der vorhergehenden Ansprüche, **dadurch gekennzeichnet, dass** sie mit Mitteln (8) zur mechanischen Verbindung zwischen den beiden Rädern (4₁, 4₂) versehen ist, die ihren Antrieb in einer gleichen Drehrichtung gestatten.

6. Vorrichtung nach Anspruch 5, **dadurch gekennzeichnet, dass** die mechanischen Verbindungsmittel eine sich entlang der Drehachse (A) der beiden Räder erstreckende Welle (8) oder auch Klauen und Nuten umfassen.

7. Vorrichtung nach einem der vorhergehenden Ansprüche, **dadurch gekennzeichnet, dass** die einander gegenüberliegenden Verzahnungen (6₁, 6₂), die an den beiden Rädern (4₁, 4₂) vorgesehen sind, identisch sind.

8. Vorrichtung nach einem der Ansprüche 1 bis 7, **dadurch gekennzeichnet, dass** die Andrückmittel Rückholmittel (60₁, 60_{2;} 110), insbesondere elastische, umfassen, die die Verzahnung (56₁, 56₂; 106₁, 106₂) der beiden Zahnräder (54₁, 54₂; 104₁, 104₂) gegen die Verzahnung (2') des ersten Übertragungsglieds (2) zurückschieben können.

9. Vorrichtung nach Anspruch 8, **dadurch gekennzeichnet, dass** die Rückholmittel mindestens eine Druckfeder (60₁, 60₂) umfassen, die sich im Wesentlichen entlang der gemeinsamen Achse (A) der beiden Räder erstreckt, wobei die oder jede axiale Feder ein entsprechendes Zahnrad (54₁, 54₂) in Richtung des ersten Übertragungsglieds (2) zurückschieben kann.

10. Vorrichtung nach Anspruch 8, **dadurch gekennzeichnet, dass** die Rückholmittel eine Drehfeder (110) umfassen, die sich zwischen den beiden Zahnrädern (104₁, 104₂) erstreckt, wobei sich jedes Ende dieser Drehfeder auf ein gegenüberliegendes Zahnrad abstützt.

11. Vorrichtung nach einem der Ansprüche 1 bis 7, **dadurch gekennzeichnet, dass** das erste Übertragungsglied (52; 102) zwei gezahnte Abschnitte (52', 52"; 102', 102") umfasst, die bezüglich einander gleiten können, und die Andrückmittel Rückholmittel (60; 120), insbesondere elastische, umfassen, die die beiden gezahnten Abschnitte gegen die Verzahnung (6₁, 6₂) eines entsprechenden Zahnrads (4₁, 4₂) voneinander weg zurückschieben können.

12. Vorrichtung nach Anspruch 11, **dadurch gekennzeichnet, dass** die Rückholmittel eine Druckfeder (60) umfassen, die zwischen den beiden verschiebbaren gezahnten Abschnitten (52', 52") angeordnet sind.

13. Vorrichtung nach Anspruch 11, **dadurch gekennzeichnet, dass** die Rückholmittel eine Drehfeder (120) umfassen, die zwischen den beiden verschiebbaren gezahnten Abschnitten (102', 102") angeordnet sind, wobei sich jedes Ende dieser Drehfeder auf einen entsprechenden verschiebbaren Abschnitt abstützt.

14. Elektrische Ausrüstung, insbesondere ein Fensterheber, eine Sitzverstellvorrichtung, ein Scheibenwischer, eine Hilfskraftlenkung oder ein Werkzeugmaschinenkodierer, **dadurch gekennzeichnet, dass** sie mindestens eine Vorrichtung zur Übertragung von Bewegungen nach einem der vorhergehenden Ansprüche umfasst.

15. Kraftfahrzeug, das mindestens eine elektrische Ausrüstung nach dem vorhergehenden Anspruch umfasst.
